# EUROPEAN PATENT SPECIFICATION

(11) **EP 2 812 555 B1**
(45) Date of publication and mention of the grant of the patent: **26.06.2019**
(21) Application number: 12848756.8
(22) Date of filing: 10.12.2012
(51) Int. Cl.: F02K 1/00, F02K 1/80, F16J 15/08

(54) **FLEXIBLE LEAF SPRING SEAL FOR SEALING AN AIR GAP BETWEEN MOVING TURBINE ENGINE EXHAUST NOZZLE PARTS**
FLEXIBLE BLATTFEDERDICHTUNG ZUM ABDICHTEN EINES LUFTSPALTS ZWISCHEN SICH BEWEGENDEN PLATTEN
JOINT FLEXIBLE À RESSORT À LAMES POUR RENDRE ÉTANCHE UN ESPACE D'AIR ENTRE DES PARTIES MOBILES D'UNE TUYERE D'UN TURBOREACTEUR

(30) Priority: 10.02.2012 US 201213371052
(43) Date of publication of application: 17.12.2014
(73) Proprietor: United Technologies Corporation, Farmington, CT 06032 (US)
(72) Inventor: BARRY, Thomas, M. Jr., East Hampton, CT 06424 (US); SCANIO, Corina, Manchester, Connecticut 06042 (US)
(74) Representative: Dehns
(86) International application number: PCT/US2012/068773
(87) International publication number: WO 2013/137951

(56) References cited:
- US-A- 3 892 358
- US-A- 4 575 099
- US-A- 4 645 217
- US-A- 5 143 292
- US-A1- 2010 074 729

## Description

### BACKGROUND OF THE INVENTION

### 1. Technical Field

The present invention relates generally to turbine engine exhaust nozzle having a flexible seal for sealing an air gap between an exhaust nozzle case and an exhaust nozzle flap.

### 2. Background Information

A thrust vectoring exhaust nozzle may include an exhaust nozzle duct formed by an exhaust nozzle case and a plurality of convergent and divergent nozzle flaps. A seal may be arranged between each nozzle flap end and a respective exhaust nozzle case sidewall to reduce core gas leakage therebetween. Typical prior art seals, however, do not accommodate outward splaying of the exhaust nozzle case sidewalls.

A turbine engine exhaust nozzle having the features of the preamble of claim 1 is disclosed in US 5143292 A. A finger seal having multiple leaf segments is disclosed in US 4645217 A.

### SUMMARY OF THE DISCLOSURE

According to the invention, there is a turbine engine exhaust nozzle as set forth in claim 1.

The foregoing features and the operation of the invention will become more apparent in light of the following description and the accompanying drawings.

### BRIEF DESCRIPTION OF THE DRAWINGS

FIG. 1 is a block diagram illustration of a gas turbine engine;
FIG. 2 is a side-view sectional illustration of a turbine engine exhaust nozzle;
FIG. 3 is a bottom-view sectional illustration of the exhaust nozzle illustrated in FIG. 2;
FIG. 4 is a cross-sectional illustration of a portion of the exhaust nozzle illustrated in FIG. 3;
FIG. 5 is a side-view illustration of a stack of seal leaf elements configured with a hinged mounting bracket;
FIG. 6 is an enlarged cross-sectional illustration of the stack of seal leaf elements illustrated in FIG. 5;
FIG. 7 is an exploded cross-sectional illustration of the stack of seal leaf elements illustrated in FIG. 6;
FIG. 8 is a bottom-view sectional illustration of a turbine engine exhaust nozzle during operation; and
FIG. 9 is a cross-sectional illustration of a portion of another turbine engine exhaust nozzle.

### DETAILED DESCRIPTION OF THE INVENTION

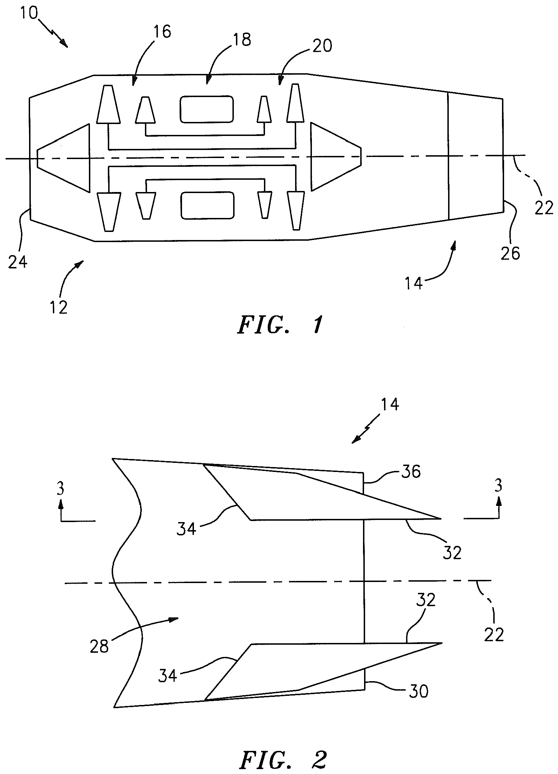

FIG. 1 is a block diagram illustration of a gas turbine engine 10 that includes an engine core 12 and a (e.g., thrust vectoring) exhaust nozzle 14. The engine core 12 includes a compressor section 16, a combustor section 18 and a turbine section 20. The engine core 12 and the exhaust nozzle 14 are sequentially arranged along a longitudinal centerline 22 between a turbine engine inlet 24 and a turbine exhaust nozzle outlet 26.

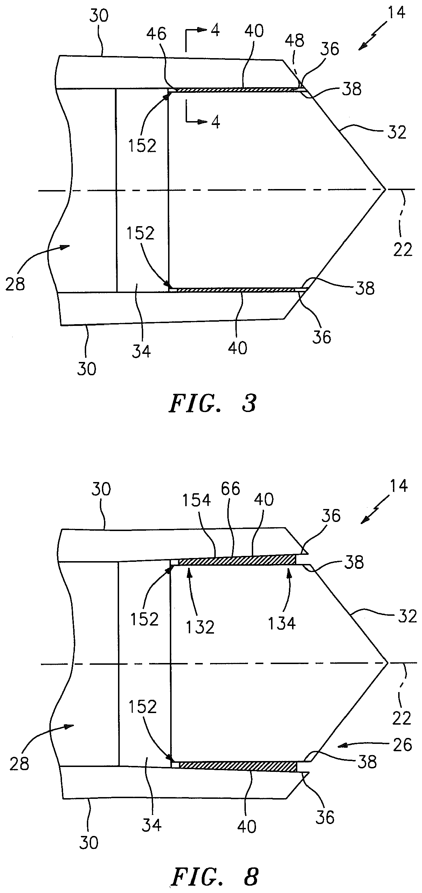

Referring to FIGS. 2 and 3, the exhaust nozzle 14 includes an exhaust nozzle duct 28 formed by an exhaust nozzle case 30 and one or more exhaust nozzle flaps (e.g., 32 and 34). The exhaust nozzle case 30 includes a plurality of first plates that are configured as, for example, exhaust nozzle duct sidewalls 36. The exhaust nozzle flaps may include one or more divergent flaps 32 and one or more convergent flaps 34. Each divergent flap 32 extends transversely between a plurality of second plates that are configured as, for example, divergent flap sidewalls 38. Examples of such an exhaust nozzle configuration are disclosed in U.S. Patent Nos. 7,874,160 and 8,020,386. The present invention, however, is not intended to be limited to any particular exhaust nozzle configuration. Referring still to FIG. 3, the exhaust nozzle 14 also includes one or more leaf spring seals 40.

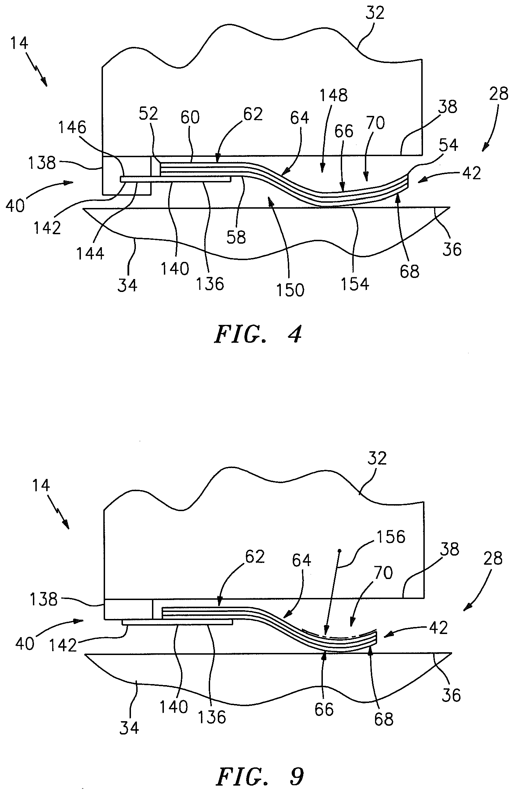

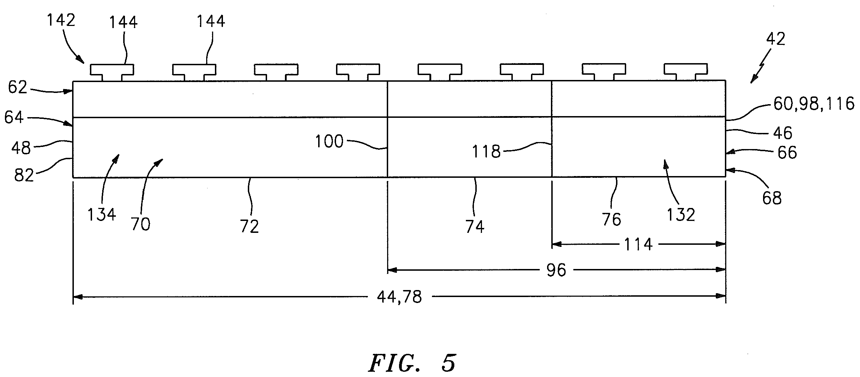

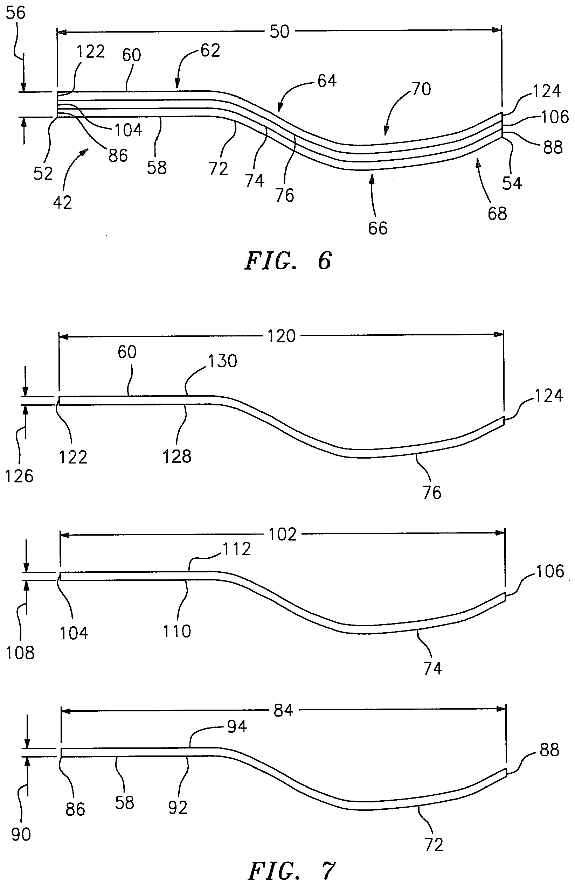

Referring to FIG. 4, each of the leaf spring seals 40 includes a stack 42 of a plurality of seal leaf elements. Referring to FIG. 5, the stack 42 has a stack length 44 that extends longitudinally between a first (e.g., forward) stack side 46 and a second (e.g., aft) stack side 48. Referring to FIG. 6, the stack 42 has a stack width 50 that extends laterally from a first stack end 52 to a distal second stack end 54. The stack 42 also has a stack thickness 56 that extends transversely between a sealing first stack surface 58 and a second stack surface 60.

Referring to FIGS. 5 and 6, the stack 42 may include a plurality of stack segments such as, for example, a base segment 62, a transition segment 64, a seal land contact segment 66 and a tip segment 68. Each of the respective segments 62, 64, 66 and 68 extends longitudinally between the first stack side 46 and the second stack side 48. The base segment 62 may extend laterally from the first stack end 52 to the transition segment 64. The transition segment 64, the seal land contact segment 66 and the tip segment 68 may be geometrically configured to form a channel 70 that extends laterally between the base segment 62 and the second stack end 54. The transition segment 64, for example, may extend laterally and transversely (in a first direction) from the base segment 62 to the seal land contact segment 66. The seal land contact segment 66 may extend laterally from the transition segment 64 to the tip segment 68. The tip segment 68 may extend laterally and transversely (in a second direction opposite the first direction) from the seal land contact segment 66 to the second stack end 54. The channel 70 may have a cross-sectional geometry that extends longitudinally between the first stack side 46 and the second stack side 48.

In the leaf spring seal embodiment illustrated in FIG. 5, the stack 42 includes a first leaf element 72, a second leaf element 74, and a third leaf element 76. The first leaf element 72 has a first element length 78 that extends longitudinally from a first element side 80 to a second element side 82. The first element length 78 may be substantially equal to the stack length 44. Referring to FIG. 7, the first leaf element 72 has a first element width 84 that extends laterally from a first element end 86 to a distal second element end 88. The first element width 84 may be substantially equal to the stack width 50 (see FIG. 6). The first leaf element 72 also has a first element thickness 90 that extends transversely between a first element surface 92 and a second element surface 94.

Referring to FIG. 5, the second leaf element 74 has a second element length 96 that extends longitudinally from a first element side 98 to a second element side 100. The second element length 96 maybe less than the first element length 78. Referring to FIG. 7, the second leaf element 74 has a second element width 102 that extends laterally from a first element end 104 to a distal second element end 106. The second element width 102 may be substantially equal to the stack width 50 (see FIG. 6). The second leaf element 74 also has a second element thickness 108 that extends transversely between a first element surface 110 and a second element surface 112. The second element thickness 108 may be substantially equal to the first element thickness 90. In alternative embodiments, however, the second element thickness 108 may be different (e.g., less or greater) than the first element thickness 90.

Referring to FIG. 5, the third leaf element 76 has a third element length 114 that extends longitudinally from a first element side 116 to a second element side 118. The third element length 114 may be less than the second element length 96. Referring to FIG. 7, the third leaf element 76 has a third element width 120 that extends laterally from a first element end 122 to a distal second element end 124. The third element width 120 may be substantially equal to the stack width 50 (see FIG. 6). The third leaf element 76 also has a third element thickness 126 that extends transversely between a first element surface 128 and a second element surface 130. The third element thickness 126 may be substantially equal to the first element thickness 90 and/or the second element thickness 108. In alternative embodiments, however, the third element thickness 126 maybe different (e.g., less or greater) than the first element thickness 90 and/or the second element thickness 108.

Referring to FIG. 6, the second leaf element 74 is arranged transversely between the first leaf element 72 and the third leaf element 76. Referring to FIG. 5, the first leaf element 72, the second leaf element 74 and the third leaf element 76 may be longitudinally aligned to provide the stack with a spring stiffness that changes (e.g., decreases) along the stack length 44. For example, the first element sides 80, 98 and 116 may be arranged at (e.g., longitudinally aligned with) the first stack side 46, which staggers the second element sides 82, 100 and 118 respectively along the stack length 44. In such a configuration, a first region 132 of the stack 42 adjacent the first stack side 46 may have a greater spring stiffness than a second region 134 of the stack 42 adjacent the second stack side 48. Referring to FIG. 6, the first element ends 86, 104, 122 maybe connected (e.g., mechanically fastened, braised, welded, etc.) together at the first stack end 52. The second element ends 88, 106 and 124 may be slidingly engaged with one another to permit lateral movement between the leaf elements 72, 74 and 76, which may dampen exhaust nozzle 14 vibrations during turbine engine 10 operation.

Referring to FIG. 4, each of the leaf spring seals 40 may also include a (e.g., hinged) mounting bracket 136 and/or a seal mount 138. The mounting bracket 136 may include a bracket base segment 140 that is laterally connected to a bracket mounting segment 142. Referring to FIGS. 4 and 5, the bracket mounting segment 142 may include one or more (e.g., T-bar) hinges 144 that are longitudinally arranged along the bracket base segment 140.

Referring to FIG. 4, the bracket base segment 140 may be engaged with the first stack surface 58 at the first stack end 52, and connected (e.g., riveted, braised, welded, etc.) to the base segment 62. The hinges 144 may be mated with one or more corresponding hinge apertures 146 in the seal mount 138 in a manner that, for example, cantilevers the stack 42 from the seal mount 138. The seal mount 138 is connected to a respective divergent flap sidewall 38. The first stack surface 58 at the seal land contact segment 66 engages (e.g., sealingly contacts) a seal land 154 on the respective exhaust nozzle duct sidewall 36. A first air gap 148 extends transversely between the respective divergent flap sidewall 38 and one or more of the stack segments such as, for example, the base segment 62, the transition segment 64, the seal land contact segment 66 and the tip segment 68. One or more second air gaps 150 extends transversely between the respective exhaust nozzle duct sidewall 36 and one or more of the stack segments such as, for example, the base segment 62, the transition segment 64 and the tip segment 68.

Referring to FIG. 1, during turbine engine 10 operation, the exhaust nozzle 14 receives core gas from the engine core 12. Referring to FIGS. 2 and 3, the exhaust nozzle duct 28 directs a relatively large portion of the core gas through the turbine exhaust nozzle outlet 26 to provide engine thrust. A relatively small portion of the core gas, however, may leak from the exhaust nozzle duct 28 into joints 152 between the exhaust nozzle duct sidewalls 36 and the divergent flap sidewalls 38. Referring to FIG. 4, this small portion of the core gas may flow into the first air gap 148 and exert a pressure force against the stack 42. The pressure force may push the seal land contact segment 66 against the respective seal land 154.

Referring to FIG. 8, during some operating conditions, the exhaust nozzle duct sidewalls 36 may (e.g., outwardly) splay apart from one another. Such splaying may non-uniformly increase displacement between each exhaust nozzle duct sidewall 36 and the respective divergent flap sidewall 38 as the exhaust nozzle 14 extends longitudinally aft towards the turbine exhaust nozzle outlet 26.

Referring to FIGS. 5 and 6, the seal leaf elements 72, 74 and 76 in each stack 42 may be sized and arranged, as described above, to provide the first (e.g., forward) stack side 46 with the relatively large spring stiffness and the second (e.g., aft) stack side 48 with the relatively small spring stiffness. Referring again to FIG. 8, the relatively large spring stiffness may be selected such that the pressure force of the leaked core gas displaces the seal land contact segment 66 in the first region 132 a relatively small distance. The relatively small spring stiffness, on the other hand, may be selected such that the pressure force of the leaked core gas displaces the seal land contact segment 66 in the second region 134 a relatively large distance. In this manner, each leaf spring seal 40 may accommodate the non-uniform displacement between the respective exhaust nozzle duct sidewall 36 and divergent flap sidewall 38, and maintain a seal between the seal land contact segment 66 and the seal land 154.

In some embodiments, for example as illustrated in FIG. 4, the transition segment 64, the seal land contact segment 66 and/or the tip segment 68 may be geometrically configured to provide the channel 70 with a (e.g., curved) compound cross-sectional geometry. In other embodiments, for example as illustrated in FIG. 9, the transition segment 64, the seal land contact segment 66 and/or the tip segment 68 may be geometrically configured to provide the channel 70 with an curved (e.g., arcuate) cross-sectional geometry having, for example, a substantially constant radius 156. In still other embodiments, the one of more of the stack segments may be geometrically configured to provide the channel with an angular compound cross-sectional geometry. In still other embodiments, the stack may be geometrically configured without the channel. The present invention, however, is not intended to be limited to any of the aforesaid stack configurations.

In some embodiments, the stack 42 may be sized and geometrically configured to preload the seal land contact segment 66 against the seal land 154.

In some embodiments, for example as illustrated in FIG. 9, the stack 42 may be rigidly connected to the seal mount 138. The bracket mounting segment 142, for example, may be connected (e.g., mechanically fastened, braised, welded, etc.) to the seal mount 138. In other embodiments, the stack may be connected (e.g., mechanically fastened, braised, welded, etc.) directly to the divergent flap sidewall. In still other embodiment, the stack may be connected to the exhaust nozzle duct sidewall, and the seal land contact segment may engage a seal land on the divergent flap sidewall.

In some embodiments, the second element sides maybe arranged at (e.g., longitudinally aligned with) the second (e.g., aft) stack side, which staggers the first element sides respectively along the stack length. In such a configuration, the first region of the stack adjacent the first (e.g., forward) stack side may have a smaller spring stiffness than the second region of the stack adjacent the second (e.g., aft) stack side. In other embodiments, the first and second element sides may be staggered along the stack length to provide the stack with a longitudinal intermediate region having a greater spring stiffness than the first region and/or the second region.

While various embodiments of the present invention have been disclosed, it will be apparent to those of ordinary skill in the art that many more embodiments and implementations are possible within the scope of the invention. Accordingly, the present invention is not to be restricted except in light of the attached claims.

## Claims

1. A turbine engine exhaust nozzle, comprising:
an exhaust nozzle case (30) comprising a seal land (154);
an exhaust nozzle flap (32) that moves relative to the seal land (154); and
a leaf spring seal (40); **characterised in that** the leaf spring seal (40) comprises:
a stack (42) of a plurality of seal leaf elements (72, 74, 76) that extend laterally from a first stack end (52) that is connected to the exhaust nozzle flap (32) to a distal second stack end (54), the stack (42) comprising a seal land contact segment (66) that extends longitudinally between a first stack side (46) and a second stack side (48);
the seal land contact segment (66) sealingly engages the seal land (154), and is separated from the exhaust nozzle flap (32) by an air gap (148); and
a first of the plurality of seal leaf elements (72, 74, 76) extends longitudinally from the first stack side (46) to the second stack side (48), and a second of the plurality of seal leaf elements (72, 74, 76) extends longitudinally from the first stack side (46) partially towards the second stack side (48).

2. The exhaust nozzle of claim 1, wherein one of the plurality of seal leaf elements (72, 74, 76) comprises a first thickness (90), and another one of the plurality of seal leaf elements (72, 74, 76) comprises a second thickness (108) that is different than the first thickness (90).

3. The exhaust nozzle of claim 1 or 2, wherein
the stack (42) further comprises a transition segment (64) that extends laterally between a base segment (62) and the seal land contact segment (66);
the transition segment (64) is separated from the exhaust nozzle flap (32) by the air gap (148) and from the exhaust nozzle case (30) by a second air gap (150); and
the base segment (62) is connected to the exhaust nozzle flap (32) and separated from the exhaust nozzle case (32) by the second air gap (150).

4. The exhaust nozzle of claim 3, wherein
the stack (42) further comprises a tip segment (68) that extends laterally from the seal land contact segment (66) to the second stack end (54); and
the tip segment (68) is separated from the exhaust nozzle flap (32) by the air gap (148) and from the exhaust nozzle case (30) by the second air gap (150).

5. The exhaust nozzle of claim 4, wherein the transition segment (64), the seal land contact segment (66) and the tip segment (68) form a channel (70) that extends longitudinally between the first stack side (46) and the second stack side (48).

6. The exhaust nozzle of claim 5, wherein the channel (70) comprises a curved cross-sectional geometry.

7. The exhaust nozzle of any preceding claim, wherein the plurality of seal leaf elements (72, 74, 76) are laterally cantilevered from a seal mount (138) that is connected to the exhaust nozzle flap (32).

## Patentansprüche

1. Turbinenmotorabgasdüse, umfassend:
ein Abgasdüsengehäuse (30), das eine Dichtungsfläche (154) umfasst;
eine Abgasdüsenklappe (32), die sich relativ zu der Dichtungsfläche (154) bewegt; und
eine Blattfederdichtung (40); **dadurch gekennzeichnet, dass** die Blattfederdichtung (40) Folgendes umfasst:
einen Stapel (42) aus einer Vielzahl von Dichtungsblattelementen (72, 74, 76), die sich lateral von einem ersten Stapelende (52), das mit der Abgasdüsenklappe (32) verbunden ist, zu einem distalen zweiten Stapelende (54) erstreckt, wobei der Stapel (42) ein Dichtungsflächenkontaktsegment (66) umfasst, das sich längs zwischen einer ersten Stapelseite (46) und einer zweiten Stapelseite (48) erstreckt;
wobei das Dichtungsflächenkontaktsegment (66) die Dichtungsfläche (154) dichtend in Eingriff nimmt und durch einen Luftspalt (148) von der Abgasdüsenklappe (32) getrennt ist; und
sich ein erstes aus der Vielzahl von Dichtungsblattelementen (72, 74, 76) längs von der ersten Stapelseite (46) zu der zweiten Stapelseite (48) erstreckt und sich ein zweites aus der Vielzahl von Dichtungsblattelementen (72, 74, 76) längs von der ersten Stapelseite (46) teilweise in Richtung der zweiten Stapelseite (48) erstreckt.

2. Abgasdüse nach Anspruch 1, wobei eines aus der Vielzahl von Dichtungsblattelementen (72, 74, 76) eine erste Dicke (90) umfasst und ein anderes aus der Vielzahl von Dichtungsblattelementen (72, 74, 76) eine zweite Dicke (108) umfasst, die sich von der ersten Dicke (90) unterscheidet.

3. Abgasdüse nach Anspruch 1 oder 2, wobei
der Stapel (42) ferner ein Übergangssegment (64) umfasst, das sich seitlich zwischen einem Basissegment (62) und dem Dichtungsflächenkontaktsegment (66) erstreckt;
das Übergangssegment (64) durch den Luftspalt (148) von der Abgasdüsenklappe (32) und durch einen zweiten Luftspalt (150) von dem Abgasdüsengehäuse (30) getrennt ist; und
das Basissegment (62) mit der Abgasdüsenklappe (32) verbunden und durch den zweiten Luftspalt (150) von dem Abgasdüsengehäuse (32) getrennt ist.

4. Abgasdüse nach Anspruch 3, wobei
der Stapel (42) ferner ein Spitzensegment (68) umfasst, das sich seitlich von dem Dichtungsflächenkontaktsegment (66) zu dem zweiten Stapelende (54) erstreckt; und
das Spitzensegment (68) durch den Luftspalt (148) von der Abgasdüsenklappe (32) und durch den zweiten Luftspalt (150) von dem Abgasdüsengehäuse (30) getrennt ist.

5. Abgasdüse nach Anspruch 4, wobei das Übergangssegment (64), das Dichtungsflächenkontaktsegment (66) und das Spitzensegment (68) einen Kanal (70) bilden, der sich längs zwischen der ersten Stapelseite (46) und der zweiten Stapelseite (48) erstreckt.

6. Abgasdüse nach Anspruch 5, wobei der Kanal (70) eine gebogene Querschnittsgeometrie umfasst.

7. Abgasdüse nach einem vorhergehenden Anspruch, wobei die Vielzahl von Dichtungsblattelementen (72, 74, 76) seitlich von einer Dichtungshalterung (138), die mit der Abgasdüsenklappe (32) verbunden ist, auskragend ist.

## Revendications

1. Tuyère de turboréacteur, comprenant :
un boîtier de tuyère (30) comprenant une bande de joint (154) ;
un volet de tuyère (32) qui se déplace par rapport à la bande de joint (154) ; et
un joint à ressort à lames (40) ; **caractérisé en ce que** le joint à ressort à lames (40) comprend :
une pile (42) d'une pluralité d'éléments de lame de joint (72, 74, 76) qui s'étendent latéralement d'une première extrémité de pile (52) qui est reliée au volet de tuyère (32) à une seconde extrémité distale de pile (54), la pile (42) comprenant un segment de contact de bande de joint (66) qui s'étend longitudinalement d'un premier côté de pile (46) à un second côté de pile (48) ;
le segment de contact de bande de joint (66) vient en prise de manière étanche avec la bande de joint (154), et est séparé du volet de tuyère (32) par un espace d'air (148) ; et
un premier élément de la pluralité d'éléments de lame de joint (72, 74, 76) s'étend longitudinalement du premier côté de pile (46) au second côté de pile (48), et un second élément de la pluralité d'éléments de lame de joint (72, 74, 76) s'étend longitudinalement du premier côté de pile (46) partiellement vers le second côté de pile (48).

2. Tuyère selon la revendication 1, dans laquelle un élément de la pluralité d'éléments de lame de joint (72, 74, 76) comprend une première épaisseur (90) et un autre élément de la pluralité d'éléments de lame de joint (72, 74, 76) comprend une seconde épaisseur (108) différente de la première épaisseur (90).

3. Tuyère selon la revendication 1 ou 2, dans laquelle
la pile (42) comprend en outre un segment de transition (64) qui s'étend latéralement entre un segment de base (62) et le segment de contact de bande de joint (66) ;
le segment de transition (64) est séparé du volet de tuyère (32) par l'espace d'air (148) et du boîtier de tuyère (30) par un second espace d'air (150) ; et
le segment de base (62) est relié au volet de tuyère (32) et séparé du boîtier de tuyère (32) par le second espace d'air (150).

4. Tuyère selon la revendication 3, dans laquelle
la pile (42) comprend en outre un segment de pointe (68) qui s'étend latéralement d'un segment de contact de bande de jointe (66) à la seconde extrémité de pile (54) ; et
le segment de pointe (68) est séparé du volet de tuyère (32) par l'espace d'air (148) et du boîtier de tuyère (30) par le second espace d'air (150).

5. Tuyère selon la revendication 4, dans laquelle le segment de transition (64), le segment de contact de bande de joint (66) et le segment de pointe (68) forment un canal (70) qui s'étend longitudinalement entre le premier côté de pile (46) et le second côté de pile (48).

6. Tuyère selon la revendication 5, dans laquelle le canal (70) comprend une géométrie à section transversale incurvée.

7. Tuyère selon une quelconque revendication précédente, dans laquelle la pluralité d'éléments de lame de joint (72, 74, 76) sont en porte à faux latéralement par rapport à une monture de joint (138) qui est relié au volet de tuyère (32).
